# EUROPEAN PATENT APPLICATION

(11) **EP 4 529 047 A1**
(43) Date of publication of application: **26.03.2025**
(21) Application number: 24201687.1
(22) Date of filing: 20.09.2024
(51) Int. Cl.: H04B 10/40, H04B 10/61

(54) **COHERENT WAVELENGTH LOCKING**

(30) Priority: 21.09.2023 US 202363539742 P
(71) Applicant: Marvell Asia Pte Ltd, Singapore 369522 (SG)
(72) Inventor: Rope, Todd, Thousand Oaks, CA 91360 (US); Choi, Sung Ju, Thousand Oaks, CA 91362 (US); Kota, Kishore, Aliso Viejo, CA 92656 (US); Fu, Yang, San Jose, CA 95148 (US)
(74) Representative: Grünecker Patent- und Rechtsanwälte PartG mbB

(57) **Abstract**

An optical communication device includes a laser, a transmitter (Tx), a receiver (Rx) and a device controller. The laser is configured to generate an optical carrier. The transmitter is configured to generate an optical Tx signal using the optical carrier and to transmit the optical Tx signal to a peer optical communication device. The receiver is configured to receive an optical Rx signal from the peer optical communication device, and to down-convert the optical Rx signal using the optical carrier. The device controller is configured to adjust a frequency of the laser to reduce a Carrier Frequency Offset (CFO) between the received optical Rx signal and the optical carrier generated by the laser, including conditionally applying to a frequency of the laser a series of frequency hops in accordance with a defined dithering sequence.

## Description

### CROSS-REFERENCE TO RELATED APPLICATIONS

This application claims the benefit of U.S. Provisional Patent Application 63/539,742, filed September 21, 2023, whose disclosure is incorporated herein by reference.

### FIELD OF THE DISCLOSURE

The present disclosure relates generally to optical communication systems, and particularly to methods and systems for controlling optical carrier wavelengths.

### BACKGROUND

A receiver in a coherent optical communication system typically generates a Local Oscillator (LO) carrier using a laser, and uses the LO carrier to down-convert an incoming optical signal for demodulation. A free-running laser, however, usually cannot maintain the frequency (wavelength) of the LO carrier with sufficient stability to enable frequency locking. The laser frequency varies, for example, as a function of temperature and output power, and also drifts over the lifetime of the laser. One possible way of improving the frequency stability of a laser is to use an optical wavelength locker.

The description above is presented as a general overview of related art in this field and should not be construed as an admission that any of the information it contains constitutes prior art against the present patent application.

### SUMMARY

An embodiment that is described herein provides an optical communication device including a laser, a transmitter (Tx), a receiver (Rx) and a device controller. The laser is configured to generate an optical carrier. The transmitter is configured to generate an optical Tx signal using the optical carrier and to transmit the optical Tx signal to a peer optical communication device. The receiver is configured to receive an optical Rx signal from the peer optical communication device, and to down-convert the optical Rx signal using the optical carrier. The device controller is configured to adjust a frequency of the laser to reduce a Carrier Frequency Offset (CFO) between the received optical Rx signal and the optical carrier generated by the laser, including conditionally applying to a frequency of the laser a series of frequency hops in accordance with a defined dithering sequence.

In some embodiments, the device controller is configured to: (i) when the CFO is within a defined CFO capture range, operate a CFO loop that adjusts the frequency of the laser to reduce the CFO, and (ii) when the CFO is outside the defined CFO capture range, apply the series of frequency hops at least until the CFO falls within the defined CFO capture range.

In some embodiments, while the CFO loop is locked, the device controller is configured to receive a reception quality measure from the peer optical communication device, and, responsively to the reception quality measure, modify the CFO loop to improve a performance metric. In an example embodiment, the device controller is configured to reduce power consumption of the optical communication device by relaxing the CFO loop. In another embodiment, the device controller is configured to reduce an error rate in the peer optical communication device by tightening the CFO loop.

In a disclosed embodiment, the device controller includes (i) a Digital Signal Processor (DSP) configured to measure the CFO and operate the CFO loop, and (ii) a controller configured to apply the series of frequency hops to the frequency of the laser. In an embodiment, the device controller is configured to initiate the series of frequency hops in response to detecting that (i) the optical Tx signal is enabled at the Tx and (ii) the received optical Rx signal is present at the Rx.

In another embodiment, the device controller is configured to adjust the frequency of the laser, and to apply the series of frequency hops to the frequency of the laser, by controlling a Thermo-Electric Cooler (TEC) coupled to the laser. In yet another embodiment, the device controller is configured to apply the series of frequency hops in accordance with a pseudo-random dithering sequence of positive-frequency hops and negative-frequency hops.

There is additionally provided, in accordance with an embodiment that is described herein, an optical communication method including generating an optical carrier using a laser. An optical transmit (Tx) signal is generated using the optical carrier and transmitting the optical Tx signal to a peer optical communication device. An optical receive (Rx) signal is received from the peer optical communication device. The optical Rx signal is down-converted using the optical carrier. A frequency of the laser is adjusted to reduce a Carrier Frequency Offset (CFO) between the received optical Rx signal and the optical carrier generated by the laser, including conditionally applying to a frequency of the laser a series of frequency hops in accordance with a defined dithering sequence.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates an optical communication system comprising optical communication devices that employ coherent wavelength locking, in accordance with an embodiment that is described herein; and
Fig. 2 is a flow chart that schematically illustrates a method for coherent wavelength locking in the optical communication devices of Fig. 1, in accordance with an embodiment that is described herein.

### DETAILED DESCRIPTION OF EMBODIMENTS

Embodiments that are described herein provide improved techniques for wavelength locking in optical communication systems. The terms "wavelength" and "frequency" are used interchangeably throughout the present disclosure.

In some embodiments, an optical communication system comprises optical communication devices that communicate with one another over a pair of optical fibers. Each optical communication device comprises a laser, a transmitter (Tx) and a receiver (Rx). The laser generates an optical carrier used for both transmission and reception. The transmitter generates an optical Tx signal using the optical carrier and transmits the optical TX signal to the peer optical communication device. The receiver receives an optical Rx signal from the peer optical communication device, and down-converts the optical Rx signal using the optical carrier as a Local Oscillator (LO).

Each optical communication device further comprises a device controller that is responsible, among other tasks, for frequency locking. The device controller may comprise a single processor, or multiple processors such as a Digital Signal Processor (DSP) and a microcontroller, for example. In the present context, the term "frequency locking" means matching the frequency of the laser (i.e., the LO frequency) to the frequency of the received optical Rx signal with sufficient accuracy that enables successful demodulation of the optical Rx signal.

In an embodiment, the device controller operates a Carrier Frequency Offset (CFO) loop that adjusts the frequency of the laser, aiming to reduce the CFO between the received optical Rx signal and the optical carrier generated by the laser. The CFO loop may comprise, for example, a Proportional-Integral-Derivative (PID) loop or any other suitable control loop.

The CFO loop has a finite capture range (also referred to as "acquisition range"). In the present context, the term "capture range" is defined as the maximal offset, between the wavelength of the received optical Rx signal and the wavelength of the optical carrier, that the device controller can measure reliably (e.g., with at least a predefined reliability or quality level). The CFO loop will operate reliably and minimize the CFO if the initial CFO is within the capture range. If the initial CFO exceeds the capture range, the CFO loop will likely fail. Large CFO values occur, for example, on initial setup of communication between the optical communication devices.

In practical implementations, the uncontrolled frequency variation of the laser (e.g., over temperature, voltage and age) cannot guarantee that the initial CFO (e.g., on link setup) will fall within the capture range of the CFO loop. It is possible in principle to reduce the laser's frequency variation using an optical wavelength locker. This solution, however, is highly expensive and thus prohibitive in some applications.

In some embodiments described herein, the device controller of the optical communication device further runs a "blind search" process that brings the initial CFO into the capture range of the CFO loop. The blind search process is typically performed at the beginning on initial set-up of a link between the optical communication devices. At this point in time, the optical communication device is completely unsynchronized with the peer device with regard to the laser frequency.

In an embodiment, in the blind search process, the device controller begins applying a defined series of frequency hops to the frequency of the laser. The series of frequency hops is referred to as a "dithering sequence". The dithering sequence is typically defined so that each optical communication device can run the blind search process independently of the peer device, but the CFO is still guaranteed to fall within the capture range after a short time period. In an embodiment, the dithering sequence comprises a pseudo-random sequence of positive-frequency hops and negative-frequency hops.

In some embodiments, the optical communication devices synchronize the beginning of the blind search process with one another, even though they operate independently. In an example implementation, each optical communication device enables its transmitter and then checks for presence of a received optical signal at its receiver. The optical communication device begins the blind search process provided that (i) its transmitter is enabled and (ii) its receiver senses a received optical signal. In this manner, both devices begin the blind search process simultaneously even though they are unable to communicate with one another at this point in time.

During application of the dithering sequence, e.g., following each frequency hop, the device controller checks whether the CFO is within the capture range. If so, the device controller terminates the blind search process and initiates the CFO loop.

The disclosed technique provides a simple and effective wavelength locking scheme that obviates the need for expensive wavelength lockers. Moreover, the disclosed technique enables the use of simpler and lower-cost lasers. Therefore, optical links that use this technique can have a considerably lower cost than conventional optical links. The disclosed optical links are suitable for use, for example, in short-haul networking applications such as within a data center, in log-haul optical links that connect between data centers, and in various other applications.

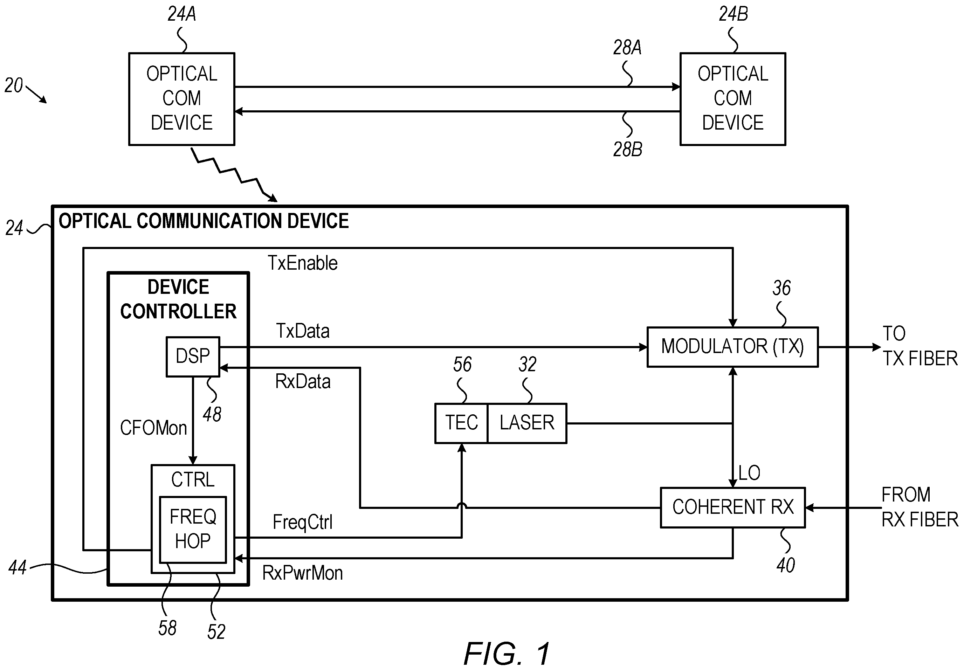

Fig. 1 is a block diagram that schematically illustrates an optical communication system 20 comprising optical communication devices 24A and 24B that employ coherent wavelength locking, in accordance with an embodiment that is described herein. Optical communication devices 24A and 24B communicate with one another over a pair of optical fibers 28A and 28B. Fiber 28A is used for communication from device 24A to device 24B. Fiber 28B is used for communication in the opposite direction, from device 24B to device 24A.

The bottom of the figure shows the internal structure of an optical communication device (e.g., device 24A or 24B) in detail. Typically, both devices 24A and 24B have this internal configuration. In the present example, device 24 comprises a laser 32, a transmitter (Tx) 36 - also referred to as a modulator, a coherent receiver (Rx) 40, and a device controller 44. Device controller 44 comprises a Digital Signal Processor (DSP) 48 and a controller 52.

Laser 32 generates an optical carrier. The optical signal is used both by transmitter 36 and by receiver 40.

Transmitter 36 receives data to be transmitted (TxData) from DSP 48, and modulates the data onto the optical carrier to produce an optical Tx signal. The optical Tx signal is transmitted to the optical fiber used for transmission to the peer optical communication device.

Receiver 40 receives an optical Rx signal, via the optical fiber used for reception from the peer optical communication device. Receiver 36 mixes the optical Rx signal with the optical carrier generated by laser 32, i.e., uses the optical carrier as a LO. The resulting down-converted signal is denoted RxData. The RxData signal is provided to DSP 48 for demodulation.

In some embodiments, device controller 44 (in the present example DSP 48 and controller 52) runs a CFO loop (e.g., a PID loop) that aligns the frequency of laser 32 (i.e., the frequency of the optical carrier, the LO frequency) to the frequency of the optical Rx signal received by receiver 40. In an embodiment, DSP 48 measures the actual CFO (the difference in frequency between the optical carrier and the optical Rx signal) by analyzing the RxData signal. DSP 48 sends to controller 52 a digital signal denoted CFOMon, which is indicative of the measured CFO. Controller 52 adjusts the laser frequency, aiming to minimize the CFO.

In an embodiment, controller 52 controls the frequency of laser 32 by controlling the temperature of a Thermo-Electric Cooler (TEC) 56 that is thermally coupled to laser 32. The signal controlling the TEC is denoted "FreqCtrl". In alternative embodiments, controller 52 may control the frequency of laser 32 using any other suitable mechanism.

As noted above, the CFO loop of device controller 44 has a certain finite capture range. If the CFO is outside the capture range, DSP 48 will be unable to measure the CFO, and the CFO loop will not converge. In practice, the frequency variation of laser 32, over temperature, voltage and aging, may cause the laser frequency to fall outside the capture range of the CFO loop. In an example embodiment, DSP 48 is able to measure the CFO provided that the CFO does not exceed ±20 GHz. The laser frequency, on the other hand, may vary by ±15-20 GHz or more. In this example, at the margins of the laser's operating conditions, the actual CFO may fall outside the capture range of the CFO loop.

In some embodiments, controller 52 comprises a frequency hopping module 58 that conditionally runs a "blind search" process, which brings the laser frequency into the CFO loop capture range. In the embodiments described herein, the blind search process is performed on initial establishment of a link between optical communication devices 24A and 24B. At this stage, the frequency offset between the lasers of the two optical communication devices is unknown and cannot be assumed to fall with the capture range of the devices' CFO loops.

More generally, frequency hopping module 58 in device 24A and/or 24B may decide to initiate the blind search process conditionally, in response to various conditions. Conditions that warrant initiating the blind search process may include, for example, a disruption of the link between devices 24A and 24B, for example due to fiber disconnection, protection switching or reset.

In an embodiment, frequency hopping module 58 begins the blind search process by applying a defined series of frequency hops to the frequency of the laser. The series of frequency hops is referred to as a "dithering sequence".

The dithering sequence is typically defined so that optical communication devices 24A and 24B can run the blind search process independently of each other, but the CFO is still guaranteed to fall within the capture range (in both devices 24A and 24B) after a short time period.

In an embodiment, the dithering sequence comprises a pseudo-random sequence of positive-frequency hops and negative-frequency hops. A typical size of a frequency hop in the sequence is on the order of ±2 GHz. A typical duration of a frequency hop in the sequence is on the order of 100 ms. In some embodiments the hops in the sequence are of equal size (equal frequency step). In other embodiments, the hops in the sequence may differ in size, e.g., the hop size (frequency step) may increase incrementally. The laser frequency thus hops in a "random walk" fashion, also referred to as a "drunkard's walk".

Frequency hopping module 58 typically confines the laser frequency to a defined frequency range (e.g., ±20 GHz, or any other suitable range). If the next pseudo-random hop in the sequence falls outside the defined frequency range, module 58 reverses the direction of the hop or otherwise keeps the laser frequency within the range.

As noted above, in the present example controller 52 controls the frequency of laser 32 by controlling the temperature of TEC 56. In practice, controller 52 typically may not possess perfect knowledge to calculate the frequency of laser 32 as a function of the temperature of TEC 56. In some embodiments, the relationship between the TEC temperature and the laser frequency is calibrated as part of the production of optical communication device 32. This process is sometimes referred to as "Beginning of Life" (BoL) calibration. Calibration information (e.g., a lookup table) that specifies this relationship is stored in controller 52 or in a memory accessible to controller 52. Controller 52 uses the calibration information to decide on the desired temperature of TEC 56 at any given time. The disclosed blind search process does not require highly accurate calibration - Frequency errors up to about ±2 GHz, and in some cases as much as ±5 GHz, are typically tolerable.

In some embodiments, device controllers 44 in optical communication devices 24A and 24B synchronize the beginning of the blind search process between them, so that both devices 24A and 24B will carry out frequency hopping simultaneously. This synchronization is performed even though devices 24A and 24B cannot communicate with one another at this stage, and each device has no information as to the laser frequency of the peer device.

In an embodiment, the above-described synchronization is based on detecting signal presence. In each of the optical communication devices, controller 52 (i) enables transmitter 36 to transmit an optical Tx signal to the peer device, and (ii) checks whether an optical Rx signal is received by receiver 40 from the peer device. In the example of Fig. 1, controller 52 enables transmitter 36 by asserting a control signal denoted "TxEnable". Controller 52 checks whether a received optical signal is present by checking a control signal denoted "RxPwrMon" asserted by receiver 40.

Once both conditions are met (Tx enables and received signal is sensed), frequency hopping module 58 begins the blind search process (i.e., begins the frequency hopping sequence). When this process is performed by each of the two device controllers 44, the search process will begin roughly at the same time in both devices 24A and 24B, even though devices 24A and 24B are unable to communicate with each other.

It should be noted that frequency hopping in a given optical communication device (24A or 24B) affects both the LO frequency (used for reception) and the frequency of the transmitted optical signal, since both use the same laser. As a result, the received optical signal in each device (24A or 24B) will also dither as a result of the dithering in the peer device. Thus, during the blind search process, lasers 32 in devices 24A and 24B will frequency-hop in a "random walk" fashion relative to one another.

At some point, the CFO in one of the devices will fall within the capture range of the CFO loop, causing that device to stop the blind search and turn on its CFO loop. As a result, the CFO in the peer device will also fall within the CFO loop capture range shortly thereafter. The two devices (24A and 24B) will therefore end the blind search and switch on their CFO loops roughly at the same time. At this stage, receivers 40 in the two devices will be able to demodulate the respective received signals, and normal communication can begin.

As seen from the above description, the CFO loops of the two optical communication devices (24A and 24B) may be actively converging simultaneously at certain times. The CFO loop in one device affects the CFO loop in the peer device, because the same laser 32 is used for both reception and transmission. The CFO loop parameters (e.g., loop gain and bandwidth) should typically take this cross-coupling into consideration. For example, in an embodiment, the CFO loop gain is set to the highest gain that still meets the following (typically with a certain safety margin):
▪ The peer CFO loop has sufficient time to lock.
▪ The CFO loop does not oscillate when both CFO loops are actively converging.

In some embodiments, after the blind search process is completed, the CFO loops are locked and normal communication is established between devices 24A and 24B, device controllers 44 (e.g., DSPs 48) in the two devices may send information to one another over a management channel (also referred to as a "backchannel"). Device controller 44 may use the information provided by its peer to optimize the frequency control of laser 32. The optimization may aim to improve various performance metrics, e.g., Bit Error Rate (BER) and/or power consumption. Aspects of closed loop control using a backchannel can be found, for example, in U.S. Patents 10,382,125, 10,841,005 and 11,239,912.

The information sent over the backchannel may comprise, for example, reception quality measures such as CFO feedback information as measured by DSP 48, BER, Mean Square Error (MSE), Analog-to-Digital Converter (ADC) fill (the percentage of ADC codes that are actually used), or any other suitable information.

In various embodiments, the information received over the backchannel can be exploited by device controller 44 in various ways. In one embodiment, when the received information indicates favorable conditions, device controller 44 may relax the control of laser 32 and allow the laser to operate closer to its natural temperature. This relaxation may increase the CFO at the peer communication device, but on the other hand reduces the power consumption of TEC 56. As another example, device controller 44 may optimize the BER at the peer communication device by controlling the frequency of laser 32 more strictly (thereby centering the laser frequency more accurately within the passbands of the transmitter and receiver filters). As yet another example, device controller may relax the CFO loop to minimize power consumption, but only up to a predefined BER threshold at the peer device. Alternatively, any other suitable optimization may be performed.

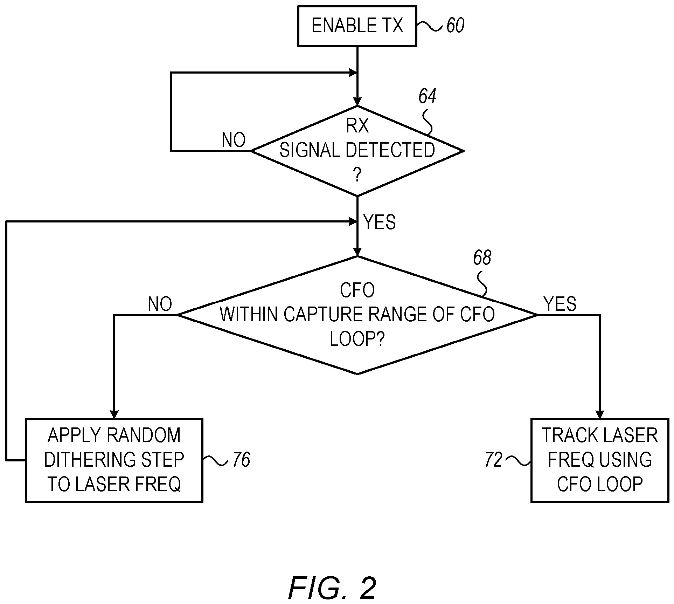

Fig. 2 is a flow chart that schematically illustrates a method for coherent wavelength locking in optical communication devices 24A and 24B of system 20, in accordance with an embodiment that is described herein. The flow chart illustrates the operation of one of the optical communication devices - referred to as "device 24" for clarity. As explained above, the two devices operate without explicit coordination, but their operation is synchronized implicitly by the signal sensing mechanism.

The method begins with controller 52 of device 24 enabling transmitter 36, at a Tx enabling stage 60. Transmitter 60 thus begins transmitting an optical Tx signal. At a reception checking stage 64, controller 52 checks whether an optical Rx signal is sensed by receiver 40. The method remains at checking stage 64 until receiver 40 notifies controller 52 that an optical Rx signal is present. Using this mechanism, and assuming fibers 28A and 28B are connected at the same time or prior to initializing devices 24, devices 24 will exit stage 64 approximately at the same time as the peer device 24.

At a CFO checking stage 68, controller 52 checks whether the CFO (as measured by DSP 48) is within the capture range of the CFO loop. If not, frequency hopping module 58 in controller 52 applies a random frequency step to laser 32, at a dithering stage 76. The method then loops back to stage 68. In this manner, frequency hopping module 58 continues to apply random frequency dithering steps to laser 32, until the CFO falls within the capture range of the CFO loop.

As soon as controller 52 detects (at stage 68) that the CFO falls within the capture range of the CFO loop, frequency hopping module 58 stops the random dithering (blind search) process and switches on the CFO loop, at a tracking stage 72. From this point, DSP 48 and controller 52 adjust the laser frequency in accordance with the CFO loop, aiming to minimize the CFO.

The configurations of system 20 and optical communication devices 24, as shown in Fig. 1, and the method flow of Fig. 2, are examples that are depicted solely for the sake of clarity. In alternative embodiments, any other suitable configurations and method flows can be used. For example, the description above presents a specific "division-of-labor", i.e., task partitioning, between DSP 48 and controller 52. In alternative embodiments, device controller 44 may comprise one or more processors of any suitable types. When device controller 44 comprises two or more processors, the various functions can be divided between the processors in any suitable way. As another example, the disclosed techniques can be applied in systems that use a single optical fiber for bidirectional communication.

The various elements of optical communication devices 24 may be implemented using dedicated hardware or firmware, such as using hard-wired or programmable logic, e.g., in an Application-Specific Integrated Circuit (ASIC) or Field-Programmable Gate Array (FPGA). Additionally, or alternatively, some functions of optical communication devices 24, e.g., some or all functions of DSP 48 and/or controller 52, may be implemented in software and/or using a combination of hardware and software elements. Elements that are not mandatory for understanding of the disclosed techniques have been omitted from the figure for the sake of clarity.

In some embodiments, some functions of optical communication devices 24, e.g., some or all functions of DSP 48 and/or controller 52, may be implemented in one or more programmable processors, e.g., one or more DSPs, Central Processing Units (CPUs) or microcontrollers, which are programmed in software to carry out the functions described herein. The software may be downloaded to any of the processors in electronic form, over a network, for example, or it may, alternatively or additionally, be provided and/or stored on non-transitory tangible media, such as magnetic, optical, or electronic memory.

Although the embodiments described herein mainly address frequency locking in optical communication devices, the methods and systems described herein can also be used in other applications involving CFO measurement.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

**The** following is a list of further preferred embodiments of the invention:
Embodiment 1. An optical communication device, comprising:
   a laser, configured to generate an optical carrier;
   a transmitter (Tx), configured to generate an optical Tx signal using the optical carrier and to transmit the optical Tx signal to a peer optical communication device;
   a receiver (Rx), configured to receive an optical Rx signal from the peer optical communication device, and to down-convert the optical Rx signal using the optical carrier; and
   a device controller, configured to adjust a frequency of the laser to reduce a Carrier Frequency Offset (CFO) between the received optical Rx signal and the optical carrier generated by the laser, including conditionally applying to a frequency of the laser a series of frequency hops in accordance with a defined dithering sequence.
Embodiment 2. The optical communication device according to embodiment 1, wherein the device controller is configured to:
   when the CFO is within a defined CFO capture range, operate a CFO loop that adjusts the frequency of the laser to reduce the CFO; and
   when the CFO is outside the defined CFO capture range, apply the series of frequency hops at least until the CFO falls within the defined CFO capture range.
Embodiment 3. The optical communication device according to embodiment 2, wherein, while the CFO loop is locked, the device controller is configured to receive a reception quality measure from the peer optical communication device, and, responsively to the reception quality measure, modify the CFO loop to improve a performance metric.
Embodiment 4. The optical communication device according to embodiment 3, wherein the device controller is configured to reduce power consumption of the optical communication device by relaxing the CFO loop.
Embodiment 5. The optical communication device according to embodiment 3, wherein the device controller is configured to reduce an error rate in the peer optical communication device by tightening the CFO loop.
Embodiment 6. The optical communication device according to embodiment 2, wherein the device controller comprises:
   a Digital Signal Processor (DSP) configured to measure the CFO and operate the CFO loop; and
   a controller configured to apply the series of frequency hops to the frequency of the laser.
Embodiment 7. The optical communication device according to embodiment 1, wherein the device controller is configured to initiate the series of frequency hops in response to detecting that (i) the optical Tx signal is enabled at the Tx and (ii) the received optical Rx signal is present at the Rx.
Embodiment 8. The optical communication device according to embodiment 1, wherein the device controller is configured to adjust the frequency of the laser, and to apply the series of frequency hops to the frequency of the laser, by controlling a Thermo-Electric Cooler (TEC) coupled to the laser.
Embodiment 9. The optical communication device according to embodiment 1, wherein the device controller is configured to apply the series of frequency hops in accordance with a pseudo-random dithering sequence of positive-frequency hops and negative-frequency hops.
Embodiment 10. An optical communication method, comprising:
   generating an optical carrier using a laser;
   generating an optical transmit (Tx) signal using the optical carrier and transmitting the optical Tx signal to a peer optical communication device;
   receiving an optical receive (Rx) signal from the peer optical communication device, and down-converting the optical Rx signal using the optical carrier; and
   adjusting a frequency of the laser to reduce a Carrier Frequency Offset (CFO) between the received optical Rx signal and the optical carrier generated by the laser, including conditionally applying to a frequency of the laser a series of frequency hops in accordance with a defined dithering sequence.
Embodiment 11. The optical communication method according to embodiment 10, wherein adjusting the frequency of the laser comprises:
   when the CFO is within a defined CFO capture range, operating a CFO loop that adjusts the frequency of the laser to reduce the CFO; and
   when the CFO is outside the defined CFO capture range, applying the series of frequency hops at least until the CFO falls within the defined CFO capture range.
Embodiment 12. The optical communication method according to embodiment 11, wherein operating the CFO loop comprises, while the CFO loop is locked, receiving a reception quality measure from the peer optical communication device, and, responsively to the reception quality measure, modifying the CFO loop to improve a performance metric.
Embodiment 13. The optical communication method according to embodiment 12, wherein operating the CFO loop comprises reducing power consumption by relaxing the CFO loop.
Embodiment 14. The optical communication method according to embodiment 12, wherein operating the CFO loop comprises reducing an error rate in the peer optical communication device by tightening the CFO loop.
Embodiment 15. The optical communication method according to embodiment 11, wherein adjusting the frequency of the laser comprises:
   measuring the CFO and operating the CFO loop using a Digital Signal Processor (DSP); and
   applying the series of frequency hops to the frequency of the laser using a controller.
Embodiment 16. The optical communication method according to embodiment 10, wherein applying the series of frequency hops comprises initiating the series of frequency hops in response to detecting that (i) the optical Tx signal is enabled and (ii) the received optical Rx signal is present.
Embodiment 17. The optical communication method according to embodiment 10, wherein adjusting the frequency of the laser, and applying the series of frequency hops to the frequency of the laser, comprises controlling a Thermo-Electric Cooler (TEC) coupled to the laser.
Embodiment 18. The optical communication method according to embodiment 10, wherein applying the series of frequency hops comprises applying a pseudo-random dithering sequence of positive-frequency hops and negative-frequency hops.

## Claims

1. An optical communication device, comprising:
a laser, configured to generate an optical carrier;
a transmitter (Tx), configured to generate an optical Tx signal using the optical carrier and to transmit the optical Tx signal to a peer optical communication device;
a receiver (Rx), configured to receive an optical Rx signal from the peer optical communication device, and to down-convert the optical Rx signal using the optical carrier; and
a device controller, configured to adjust a frequency of the laser to reduce a Carrier Frequency Offset (CFO) between the received optical Rx signal and the optical carrier generated by the laser, including conditionally applying to a frequency of the laser a series of frequency hops in accordance with a defined dithering sequence.

2. The optical communication device according to claim 1, wherein the device controller is configured to:
when the CFO is within a defined CFO capture range, operate a CFO loop that adjusts the frequency of the laser to reduce the CFO; and
when the CFO is outside the defined CFO capture range, apply the series of frequency hops at least until the CFO falls within the defined CFO capture range.

3. The optical communication device according to claim 2, wherein, while the CFO loop is locked, the device controller is configured to receive a reception quality measure from the peer optical communication device, and, responsively to the reception quality measure, modify the CFO loop to improve a performance metric.

4. The optical communication device according to claim 3, wherein the device controller is configured to reduce power consumption of the optical communication device by relaxing the CFO loop.

5. The optical communication device according to claim 3, wherein the device controller is configured to reduce an error rate in the peer optical communication device by tightening the CFO loop.

6. The optical communication device according to claim 2, wherein the device controller comprises:
a Digital Signal Processor (DSP) configured to measure the CFO and operate the CFO loop; and
a controller configured to apply the series of frequency hops to the frequency of the laser.

7. The optical communication device according to one of claims 1 to 6, wherein the device controller is configured to initiate the series of frequency hops in response to detecting that (i) the optical Tx signal is enabled at the Tx and (ii) the received optical Rx signal is present at the Rx.

8. The optical communication device according to one of claims 1 to 7, wherein the device controller is configured to adjust the frequency of the laser, and to apply the series of frequency hops to the frequency of the laser, by controlling a Thermo-Electric Cooler (TEC) coupled to the laser.

9. The optical communication device according to one of claims 1 to 8, wherein the device controller is configured to apply the series of frequency hops in accordance with a pseudo-random dithering sequence of positive-frequency hops and negative-frequency hops.

10. An optical communication method, comprising:
generating an optical carrier using a laser;
generating an optical transmit (Tx) signal using the optical carrier and transmitting the optical Tx signal to a peer optical communication device;
receiving an optical receive (Rx) signal from the peer optical communication device, and down-converting the optical Rx signal using the optical carrier; and
adjusting a frequency of the laser to reduce a Carrier Frequency Offset (CFO) between the received optical Rx signal and the optical carrier generated by the laser, including conditionally applying to a frequency of the laser a series of frequency hops in accordance with a defined dithering sequence.

11. The optical communication method according to claim 10, wherein adjusting the frequency of the laser comprises:
when the CFO is within a defined CFO capture range, operating a CFO loop that adjusts the frequency of the laser to reduce the CFO; and
when the CFO is outside the defined CFO capture range, applying the series of frequency hops at least until the CFO falls within the defined CFO capture range.

12. The optical communication method according to claim 11, wherein operating the CFO loop comprises, while the CFO loop is locked, receiving a reception quality measure from the peer optical communication device, and, responsively to the reception quality measure, modifying the CFO loop to improve a performance metric.

13. The optical communication method according to claim 12, wherein operating the CFO loop comprises reducing power consumption by relaxing the CFO loop, or
wherein operating the CFO loop comprises reducing an error rate in the peer optical communication device by tightening the CFO loop.

14. The optical communication method according to one of claims 11 to 13, wherein adjusting the frequency of the laser comprises:
measuring the CFO and operating the CFO loop using a Digital Signal Processor (DSP); and
applying the series of frequency hops to the frequency of the laser using a controller.

15. The optical communication method according to one of claims 10 to 14, wherein applying the series of frequency hops comprises initiating the series of frequency hops in response to detecting that (i) the optical Tx signal is enabled and (ii) the received optical Rx signal is present, or
wherein adjusting the frequency of the laser, and applying the series of frequency hops to the frequency of the laser, comprises controlling a Thermo-Electric Cooler (TEC) coupled to the laser, or
wherein applying the series of frequency hops comprises applying a pseudo-random dithering sequence of positive-frequency hops and negative-frequency hops.
